# EUROPEAN PATENT APPLICATION

(11) **EP 2 750 468 A1**
(43) Date of publication of application: **02.07.2014**
(21) Application number: 12250189.3
(22) Date of filing: 31.12.2012
(51) Int. Cl.: H04W 72/12

(54) **Spectrum prediction**

(71) Applicant: British Telecommunications public limited company, London EC1A 7AJ (GB)
(72) Inventor: The designation of the inventor has not yet been filed
(74) Representative: Chan, Robin

(57) **Abstract**

The present invention relates to a system for allocating unused radio frequency spectrum channels in shared spectrum bands such as TV Whitespace. A spectrum manager is arranged to maintain a historic profile of available channels in a given area in order to provide predications of channel quality behaviour to devices which request spectrum for data transmission.

## Description

The present invention relates to radio frequency spectrum analysis and in particular to a method of spectrum management in a shared spectrum environment.

### Introduction

In many countries around the world, the use of the radio frequency spectrum is regulated such that particular applications of wireless transmission can only legally occur within particular frequency ranges. One example range is the 30 MHz to 300 MHz radio frequency range designated as 'very high frequency' (VHF) which is authorised for early television transmission, digital audio broadcasting and some frequency modulation (FM) radio stations. Another range is the 300 MHz to 3 GHz radio frequency range designated as 'ultra high frequency' (UHF) which is authorised for applications such as analogue and digital television transmission. Such regulation is carried out by organisations such as the Federal Communications Commission (FCC) in the USA and the Office of Communications (Ofcom) in the UK.

As well as regulating new spectrum, one of the regulatory tasks is to reallocate the frequency spectrum to accommodate the phasing out of old transmission technologies in favour of newer more efficient means. One such change is the process of replacing analogue television broadcasting with digital broadcasting techniques. This process, commonly referred to as the Digital Switch Over (DSO), was completed in the USA in June 2009 and is expected to be completed in the UK in 2012.

In the UK, a frequency range of 470 MHz to 862 MHz is currently allocated to analogue television transmission. To minimise the effects of crossover interference of the separate transmissions, the UHF frequency range is divided into a number of non-overlapping sub-ranges called channels. In the UK, this is represented as channels 21 to 69 and an analogue television transmission can be broadcast on a particular channel without causing interference to adjacent channels. After the DSO in the UK, parts of the frequency ranges currently used by analogue TV transmission will become vacant. This is because the content previously transmitted as an analogue signal is now sent as a digital TV transmission which is spectrally more efficient and hence requires less frequency range. These channels are called cleared channels and are now being licensed to other services through national spectrum auctions. Furthermore, after the DSO is complete, at any given location there will be a number of channels which are not used for TV transmission in that area due to frequency planning. This locally unused spectrum is collectively referred to as TV White Space. One proposal is that the TVWS will be allocated for short range data transmission between low-power devices as well as wireless microphones. Low power wireless devices (usually around 100mW-4W EIRP) can therefore in principle operate in these unused channels on a secondary basis without causing interference to the operation of nearby TV broadcast infrastructure. The TWVS spectrum has attracted a lot of interest because the VHF and UHF frequency bands are well suited to many wireless and mobile applications because of good propagation and penetration properties; in particular the UHF radio frequency range is very effective at propagating through walls within buildings.

In the UK the new TV whitespace range will be around 256 MHZ (32 channels) of UHF spectrum dedicated for digital TV transmission and at any location the unused portion of this spectrum will comprise the TVWS spectrum. For comparison, the 3G spectrum range in the UK is nearly half the size at 140 MHz. However, it should be noted that due to the location of the television transmitters and regional grouping of the transmission frequencies used, the amount of TVWS and its frequency decomposition is not constant across the country but will vary from location to location.

An application of the available frequency range resulting from the DSO is to enable short range wireless data transmission between so called White Space Devices (WSDs) which are suited to short distance transmissions. Wireless microphones (WMs) are also being used in this UHF range. Proposals are currently being finalized in both the United States and the UK to regulate the secondary use of the TVWS frequencies by WSDs and similar proposals are also under consideration within the EU. In addition to TV broadcasting services, wireless microphones and other PMSE (Programme Making and Events) equipment are also allowed by regulators to operate in TV bands on a non-interfering basis.

In order to be able to detect TVWS channel availability and avoid causing harmful interference to TV and PMSE, WSD devices are mandated by the US regulator, FCC, and its counterpart in the UK, Ofcom to operate in one of two methods: sensing and geolocation databases. These methods are briefly described below.

### Sensing

The first method involves using device sensing techniques. In these methods the WSDs have additional functionality to detect TV and WM signals prior to data transmission. A WSD periodically scans all TV channel frequencies. If it doesn't detect a TV or WM signal, then the channels is considered free for use and could be used by the WSD for low power transmission.

However, there are a number of problems with the sensing method. First of all, sensing is a statistical method and is prone to both false negatives and false positives. In the first case, a WSD may mistakenly transmit in a channel that is occupied by TV or WM transmission and therefore can cause harmful interference. In the second case, a WSD mistakenly determines that a particular channel is occupied and by not using that bandwidth, misses a transmission opportunity. To reduce the chance of false negatives the regulators have required that WSD which use sensing should be able to detect even extremely weak signals. However, the complex sensing functionalities that need to be implemented to satisfy regulatory requirements can drive up the cost of devices, as well as causing significant battery drain which is an issue in the case of handheld devices.

### Geolocation databases

It is also known in the art to use a geolocation database or several such databases (GDB) which contain overall knowledge of the radio spectrum usage in any given area and can tell WSDs which channels are free for use in the vicinity of the requesting WSD. In this method a WSD can determine its location and then sends a request to the geolocation database with this location information. The database has access to information on the location, frequency; transmit power, antenna heights and radiation patterns of all TV transmitters covered by the geolocation database. The database uses this information along with the information received from the WSDs to perform a set of propagation modelling calculations and based on these calculations, requesting WSDs are informed of the available channels at their locations, the maximum transmit power to be used for each channel, and possibly a time validity parameter. Based on this information the WSD then can access one or more TVWS channels using a maximum transmit power that is specified by the GDB.

Unlike sensing which is a stand-alone method, the geolocation database approach requires one or more commercial entities to maintain the database information and provide database services. In the United Sates, there are currently 9 commercial entities, including Google and Microsoft that have been selected by the FCC as designated database providers. In the UK, Ofcom is expected to make a call for proposals for database providers in 2013.

When a WSD polls the GDB, the information is only valid for that particular time. Therefore in order to avoid accidentally causing interference to the primary transmitters, each WSD must only broadcast for a short period of time and then must frequently poll the GDB. This is time consuming and an unnecessary burden on the WSDs and the GDB.

The present invention addresses the above problems.

### Statements of invention

In one aspect, the present invention provides a method of spectrum management comprising: analysing data relating to available radio frequency resource in a geographical area; generating a historic profile of at least one characteristic of said available radio frequency resource relating to the quality thereof; and predicting an amount of time at least a part of the available radio frequency resource will be available for future use based on the historic profile.

In another aspect, the present invention provides apparatus for managing radio frequency resources comprising: means for analysing data relating to available radio frequency resource in a geographical area; means for generating a historic profile of at least one characteristic of said available radio frequency resource relating to the quality thereof; and means for predicting an amount of time at least a part of the available radio frequency resource will be available for future use based on the historic profile.

### List of Figures

In order to aid understanding of the invention, illustrative embodiments of the present invention will be described with the aid of the accompanying figures in which:
Figure 1 shows an example system for managing radio frequency spectrum according to an embodiment of the invention;
Figure 2 shows the functional relationship between a geolocation database server, shared spectrum manager and client device illustrated in Figure 1;
Figure 3 shows the functional components of the geolocation database;
Figure 4 shows a grid overlay on a geographical region such as the UK to illustrate the pixel regions stored in the geolocation database of Figure 3;
Figure 5 is a table showing an example geolocation database server response to a query relating to a particular pixel;
Figure 6 schematically shows the physical components of a shared spectrum manager device illustrated in Figure 1;
Figure 7 schematically shows an alternative view of the shared spectrum manager in terms of functional components running on the physical components;
Figure 8 shows a data table at the shared spectrum manager identifying the connected devices and their allocated channels;
Figure 9 is a graph showing the historic channel quality for a number of channels;
Figure 10 is a flowchart showing the operation of the shared spectrum manager to refresh the stored historical log data;
Figure 11 shows the physical components of a client device in accordance with the first embodiment;
Figure 12 shows an alternative view of the client device illustrated in Figure 11 in terms of the functional components implemented by the physical components;
Figure 13 is a flowchart showing the interaction between the client device, the shared spectrum manager and the geolocation database server when the client device requests a channel for data transmission;
Figure 14 shows the format of an availability message sent from a shared spectrum manager;
Figure 15 is a flowchart showing an example of how the channel prediction is generated by the shared spectrum manager; and
Figure 16 is a flowchart showing the channel selection step performed by the client device to select a channel in more detail.

### Description

### System Overview

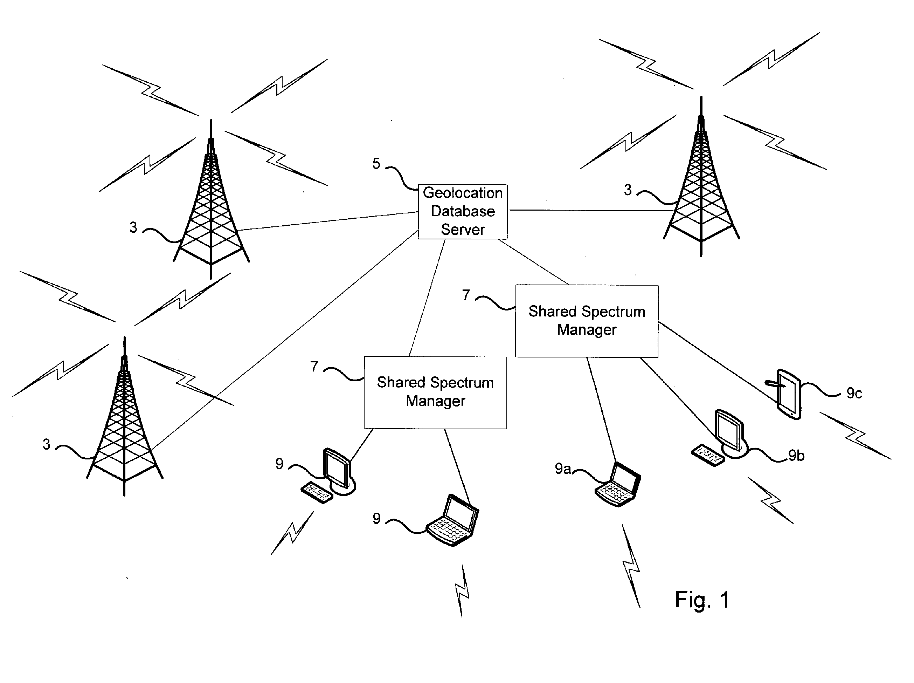

Figure 1 shows the overall system diagram according to a first embodiment. In the example system shown in Figure 1, there are a number of digital TV transmitters 3, each transmitting TV signals on different frequency channels in the UHF range to provide TV coverage within a surrounding broadcasting area. The information regarding each TV transmitter's 3: location, the transmission frequencies and other operation details, such as antenna height etc. are stored in a geolocation database 5 server. As will be described later, the total region covered by the geolocation database 5 server is divided into sub-regions hereinafter referred to as pixels. For each pixel, the geolocation database server 5 stores information on the number of free channels which are available for data transmission by client devices 9.

For each pixel region, a shared spectrum manager 7 manages use of the available shared spectrum, in this embodiment TV White Space, not used by primary transmitters such as the TV transmitters. The available spectrum can be used by cognitive radio devices such as TV Whitespace devices which will hereinafter be referred to in this embodiment as client devices 9. As will be explained later, the shared spectrum manager 7 is responsible for receiving requests for spectrum from client devices 9 wishing to transmit information using the shared spectrum. The shared spectrum manager 7 communicates with the geolocation database 5 to determine how much spectrum in the form of channels are available and furthermore, to provide requesting client devices 9 with an indication of how long each available channel will be available for use in transmitting data before a primary transmitter commences transmission. In this embodiment, the client devices 9 include mobile telephones, desktop and notebook computers and tablet computers. In this embodiment, the client devices 9 have fixed locations during operation and their identities and location are registered with the shared spectrum manager 7 when they are first initialised.

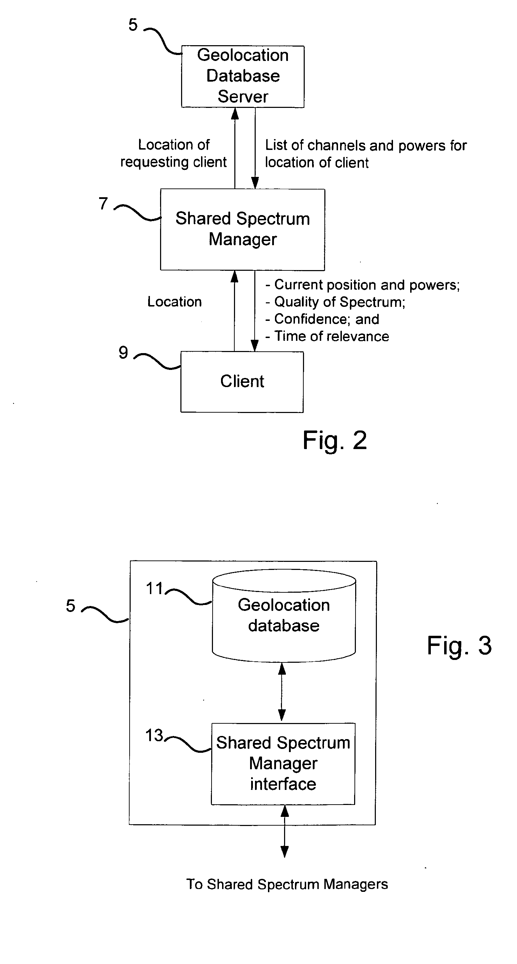

Figure 2 shows an overview of the functional relationship between the geolocation database server 5, the shared spectrum manager 7 and a client device 9 in the first embodiment. In general, when the client device 9 requires spectrum for a data session, it sends its location to the shared spectrum manager 7 with an indication of the amount of spectrum it requires. The shared spectrum manger 7 forwards the location information in the client device 9 request to the geolocation database server 5. The geolocation database server 5 returns a list of channels and transmission powers that may be used in the location of the client device at that moment in time. The shared spectrum manager 7 processes that returned data so that the response to the client request might be [Channel 20, 4 watts, 20 seconds, high, 0.5], which means channel 20 can be used with a transmit power of 4 watts, for 20 second at a high quality, with a probability of 0.5 that the quality will remain high (or above high) for the 20 seconds. Such information can enable client devices 9 to more accurately select channels for data transmission having characteristics which match the requirements of the data transmission session.

### Geolocation database server

The specific architecture of the geolocation database server 5 is beyond the scope of the present invention and therefore it will be generally described in terms of the inputs it can receive and the output supplied to the shared spectrum manager 7. Figure 3 shows the functional components of the geolocation database server 5 illustrated in Figure 1.

In this embodiment the geolocation database server 5 is located centrally within a computer network and stores data relating to a geographical area such as a country or part of a country such as a city.

The geolocation database server 5 contains a geolocation database 11 storing information on various aspects of the spectrum utilisation in the coverage area by primary transmitters. An interface 13 provides external entities such as shared spectrum managers 7 or directly to client devices 9 with access to the geolocation database 11.

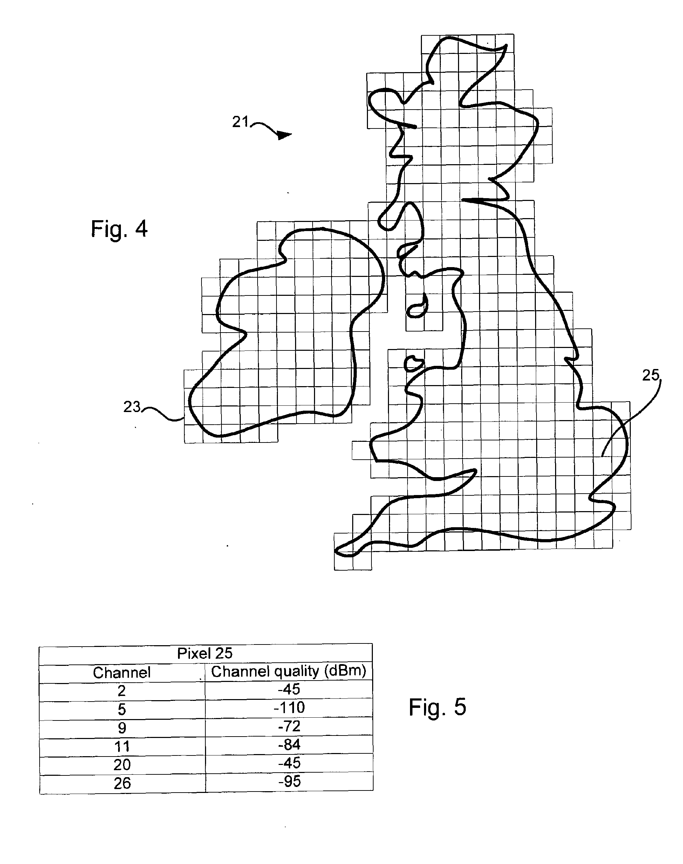

Figure 4 shows an example coverage area 21 divided into regional pixels 23. The primary transmitters is not constant across the coverage area due to regional interference and transmitter placement. Pixels 23 therefore provide access to more granular information. In the embodiment, the regions represent equally sized geographic regions.

Figure 5 shows an example of the information stored in the geolocation database 11 for an exemplary pixel 25 covering the Ipswich, UK area. In this example, the pixel contains a list of the available channels in the geographical region represented by exemplary pixel 25 and the interference at each channel caused by the primary transmitters.

### Shared spectrum manager

In the first embodiment, the shared spectrum manager 7 is responsible for communicating with client devices 9 when they have requests for shared spectrum and providing more accurate and detailed information regarding the shared spectrum that is available to the client devices 9.

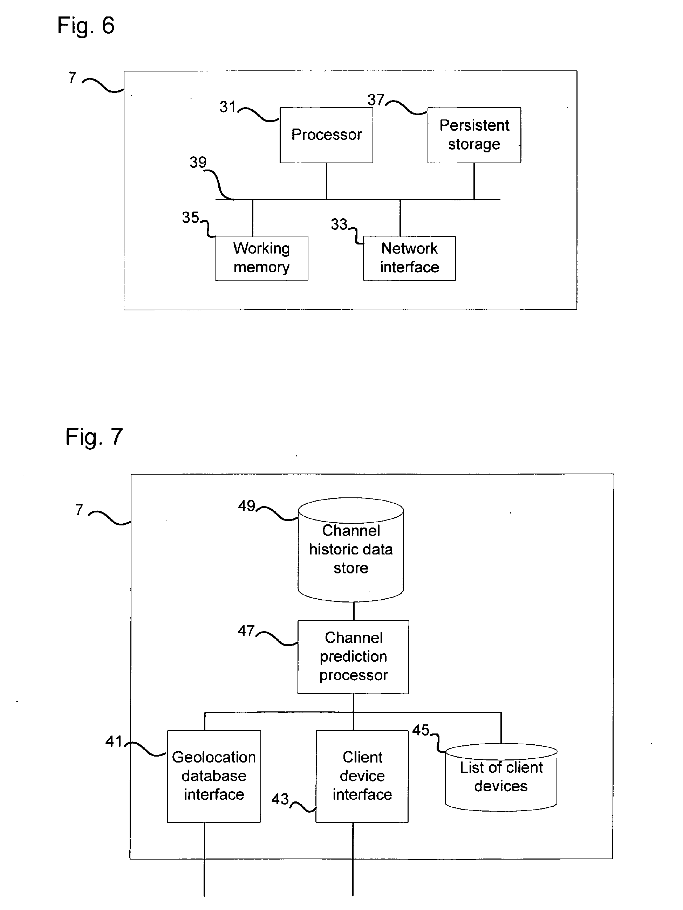

Figure 6 shows the physical components of the shared spectrum manager 7. The shared spectrum manager 7 has a network interface 33 for connection to the geolocation database server 5 and also with client devices 9 within the regional coverage of the shared spectrum manager 7. A central processor 31 controls the overall operation of the shared spectrum manger 7 and a working memory 35 and persistent data store 37 contain processing instructions and functional data.

When suitable computer program instructions stored in the persistent data store 37 are executed by the processor 31, the operation of the shared spectrum manager 7 can be regarded as a set of functional units formed of a combination of physical components. Figure 7 shows the functional components of the shared spectrum manager 7.

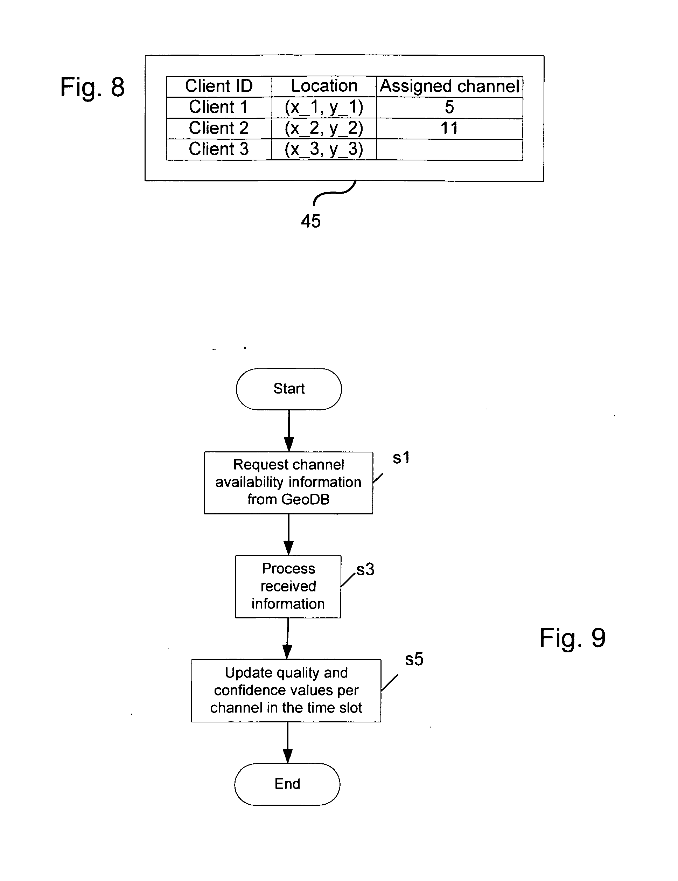

From a functional viewpoint, the shared spectrum manager 7 contains a geolocation database interface 41 connected to the geolocation database server 5 for determining which channels in a pixel are free, and a client device interface 43 for communication with the client devices 9 for registration into a client list 45 and notifying the client devices 9 which channels are free when they make a request. Figure 8 shows an example client table 45. In Figure 8, three clients have registered with the shared spectrum manager 7 with their coordinates. Furthermore, clients 9a and 9b are already using channels 5 and 11 already while client 9c has registered but has not yet requested shared spectrum for transmission.

Internal processing is handled by a channel quality prediction processor 47, and a channel historic data store 49.

The channel quality prediction processor 47 is responsible for processing information received from the geolocation database server 5 via the geolocation database interface 41 to calculate not only which channels are available to the client devices 9, but also predict the amount of time that a channel will remain at a certain quality.

Figure 9 shows the processing of the shared spectrum manager to build up the historic data as a basis for predicting a channel quality at any given time.

In step s1, the shared spectrum manager 7 sends a request to the geolocation database server 5 for channel availability information. In step s3, the channel information is received from the geolocation database server 5 and processed as will be described in more detail later. Finally in step s5, the quality and confidence values for each channel are updated for that particular time of polling.

The shared spectrum manager is arranged to poll the geolocation database server 5 regularly in order to build up an accurate view of the channel quality throughout the day. In this embodiment, the polling occurs every 30 minutes. For a more accurate profile the polling can occur more frequently.

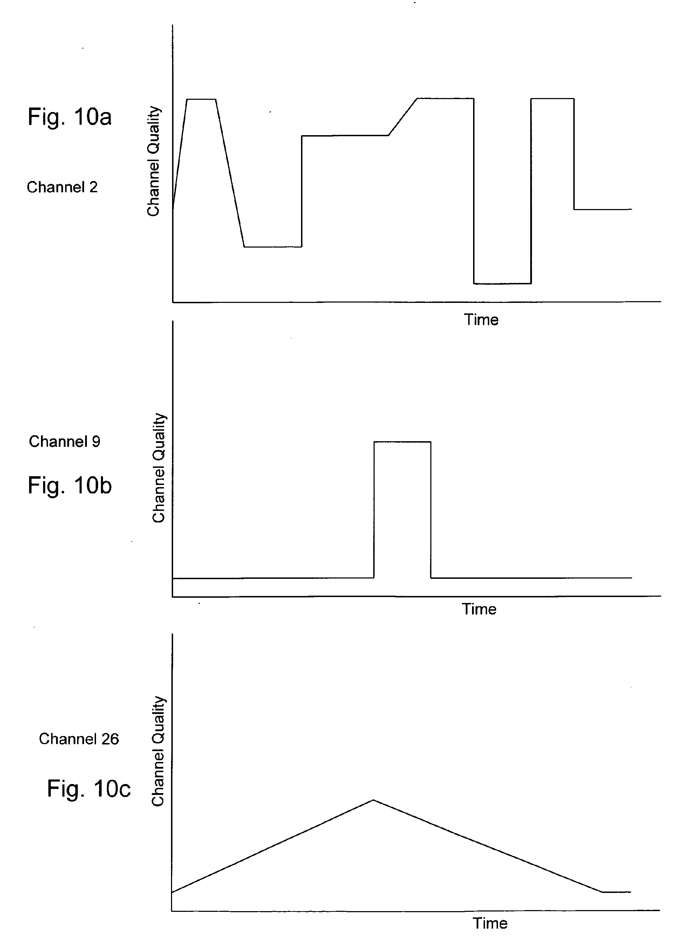

Figure 10 shows the contents of the channel historic store 49 for a number of available channels represented as a line graph plotting channel signal quality as a function of time. Figure 10a shows the historic channel quality for exemplary channel 2, Figure 10b shows the historic channel quality for exemplary channel 9 and Figure 10c shows the historic channel quality for exemplary channel 26.

As shown in Figure 10a, for channel 2 the channel quality is highly variable throughout the day but has a high peak quality.

As shown in Figure 10b, for channel 9, the channel quality is generally poor apart from a specific window in the middle of the day.

As shown in Figure 10c, for channel 26, the channel quality increases throughout the day till midday, then drops in the evening.

The historic data is built up by polling the channel quality throughout the day for all channels. This provides the basis of the estimate of channel quality provided to the home hubs.

### Client device

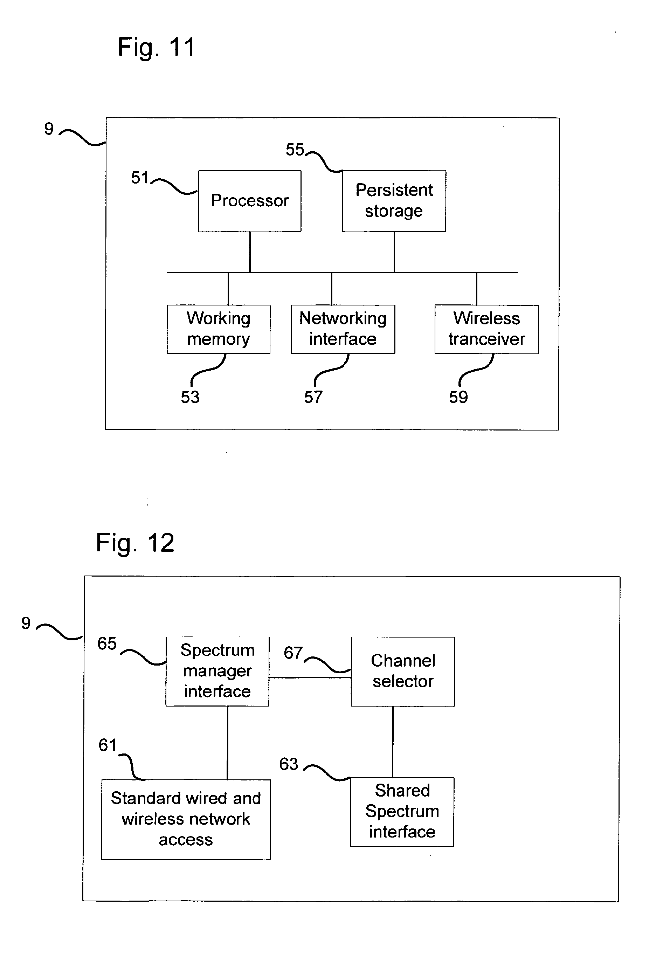

Figure 11 shows the physical components of a client device 9. It comprises a processor 51, working memory 53, persistent storage 55, a network interface 87 and a wireless transceiver 59 compliant with the IEEE 802.11af and/or 802.22 protocols for accessing White Space spectrum.

When configured with processing instructions stored in working memory 53 or persistent storage 55, the client device 9 can be regarded in terms of functional units. Figure 12 shows the functional components of the client device 9. The client device 9 contains the conventional network access 61 and also contains a spectrum manager interface 65, a shared spectrum interface 63 and a channel selector 67 for selecting one or more channels within the available shared spectrum based on the data provided by the shared spectrum manager 7.

### Overview of the operation

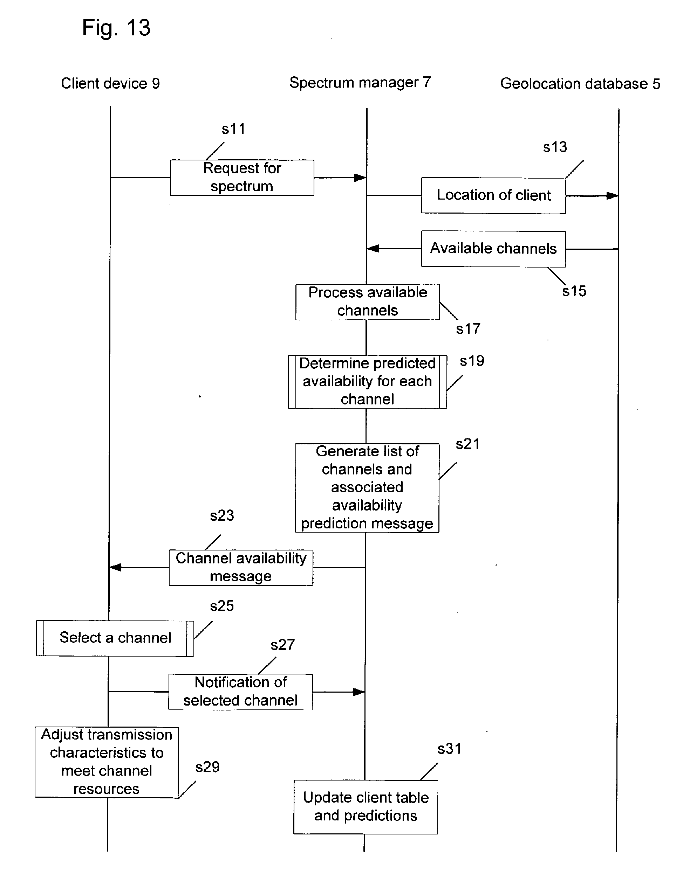

Now that the main system components have been described, the overall operation of the coordinated system will be explained with reference to Figure 13.

In step s11, the client device 9 sends a request for spectrum to the shared spectrum manager 7. This request includes the location of the client device 9 and may include an indication of the amount of spectrum required. The request is received at the shared spectrum manager 7 and in step s13 the request to the geolocation database server 5 is the location of the client device 9.

In step s15, the geolocation database server 5 accesses the respective pixel 23 and returns a list of the available channels to the shared spectrum manager 7 as shown in Figure 5.

The shared spectrum manager 5 processes the received list of currently available channels in step s17 and in step s19 then determines more details regarding the available channels in terms of the quality, confidence in the quality and a time duration for the quality. This process will be described in more detail later.

Once the processing to determine the future availability of the channels is complete, in step s21, the shared spectrum manager 7 generates a response message containing a list of the available channels and their respective predicted availabilities. In step s23 the generated message is sent to the home hub.

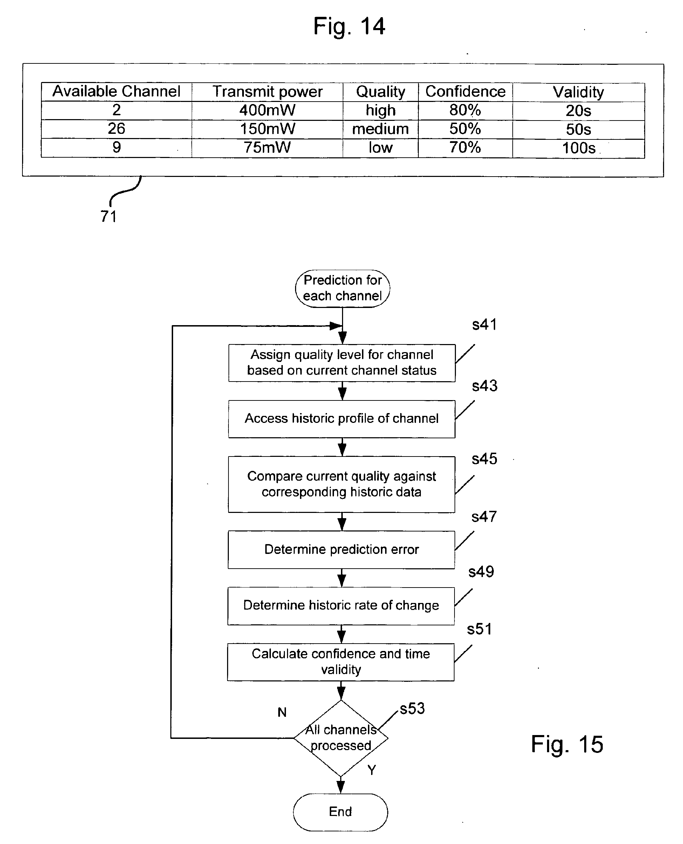

Figure 14 shows an example message sent from the shared spectrum manager 7 to the requesting client device 9.

In this example, the message contains three available channels. Channel 2 can be used with a transmit power of 400mW for 20 seconds at a high quality with a 0.8 probability that the quality will remain high for the 20 second period. Channel 26 can be used with a transmit power of 150mW for 50 seconds at a medium quality with a 0.5 probability that the quality will remain medium or better for the 50 second period. Channel 9 can be used with a transmit power of 75mw for 100 seconds at a low quality with a 0.7 probability that the quality will remain low for the 100 second period.

Returning to Figure 13, once the message is received by the home hub, in step s25, the message is analysed and the client device 9 selects a channel based on the availability information. This process will be described in more detail later.

In step s27, the client device 9 sends a message back to the shared spectrum manager 7 containing the identity of the selected channel or channels and in step s29 starts transmitting after adjusting the shared spectrum interface to meet the channel characteristics. Finally once the message arrives at the shared spectrum manager 7 in step s31, the client data store 45 is updated with the client device's 9 selected channel or channels.

### Channel Prediction

The processing of the channel predication processor 47 of the shared spectrum manager 7 in step s19 to generate the prediction of future channel availability when a request from a client device 9 is received will now be described in more detail with reference to Figure 15.

Starting with the first available channel in the list from the geolocation database server 5, in step s41, the current quality level of the available channel is classified as being either a high, medium or low quality signal based on thresholds of interference and signal strength.

Then in step s43 the historic profile of the channel being analysed is retrieved from the channel historic data store 49 and in step s45 a comparison is made between the current value and the stored historic value for the current time and in step 47 the prediction error is calculated to determine how different the values are in order to determine a first indication in confidence that the current availability will follow the historic trend. In step s49, the future rate of change of prediction is also determined.

Based on the information determined in steps s47 and s49, the confidence and time values are calculated in step s51. Where the current value is very similar to the history values and the channel is historically stable, then the confidence value will be very high for a long period of time. Conversely, where there are large discrepancies, the confidence value will be much lower and the time value will also be lower.

In step s53 a check is made to determine whether there are any remaining available channels to be processed, if there are, then processing returns to step s41 for the next available channel. If there are not, then prediction processing ends and the channel availability message 71 is sent in steps s21.

### Channel selection

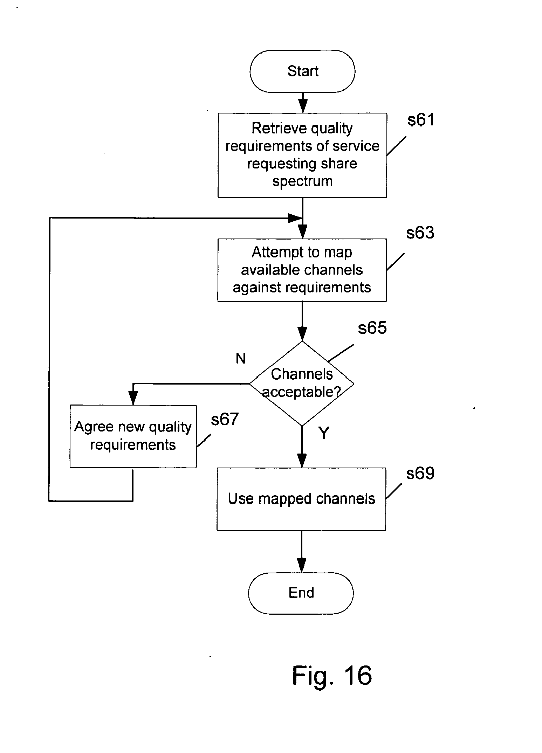

The operation of the channel selector 67 of the client device 9 in step s25 will now be described with reference to Figure 16.

In step s61, the channel selector 67 retrieves the quality requirements of the service which requires the spectrum request and in step s63 the channel selector 67 attempts to map the quality and confidence characteristics of the available channels to the service requirements. In step 65 a test is carried out to determine if the channels are acceptable and if so, then in step s69 the acceptable channel, or most acceptable channel is selected and processing continues to step s27 in Figure 13. If not, then in step s67 channel selector agrees new requirements and processing returns to step s63 until a channel is found.

In the first embodiment, the operation of the shared spectrum manager allows client devices to not only determine which channels are available but to also obtain a measure of the quality of the channel but also a prediction of how long the channel will stay at its current quality and a confidence value of the prediction. In this way, the client can more accurately assess which channels are most suitable for the various types of transmission requirements.

### Alternatives and modifications

In the embodiment, the pixels in the geolocation database server are representative of equally sized regions. In an alternative, the pixels are created based on potential user density. For example, there would be five regional pixels for a 10km² area of a city whereas only one region pixel for 10km² in countryside.

In the first embodiment, the shared spectrum manager predicts the future availability based on the historic availability of spectrum for the location of the client devices which have a fixed location. In an alternative, more sophisticated predictions are performed to account for movement of a mobile client device. The client devices are configured to send information on their location and amount of spectrum required as in the first embodiment, but additionally, they also send information relating to their current movement which may affect the availability of spectrum in the future including antenna patterns, quality of spectrum, signal strengths and estimate of bit errors from decoders. Using this extra information, the shared spectrum manager includes a further processing step to predict the path trajectory of the client device based on the antenna patterns and factor that into the list of channels that are sent to the client device as being available.

In the embodiment, the shared spectrum manager monitors spectrum in the TV Whitespace frequency range. However there are other shared spectrum bands and these may be used in an alternative.

In the embodiment, the shared spectrum manager obtains information of channel availability from the geolocation database. In an alternative, the shared spectrum manager supplements the information with its own sensing network.

It will be appreciated that the prediction and selection routines are exemplary and other alternative methods can be used while still falling within the scope of the invention.

## Claims

1. A method of spectrum management comprising:
analysing data relating to available radio frequency resource in a geographical area;
generating a historic profile of at least one characteristic of said available radio frequency resource relating to the quality thereof; and
predicting an amount of time at least a part of the available radio frequency resource will be available for future use based on the historic profile.

2. A method according to claim 1, further comprising receiving a request for radio frequency resource and the predicting step is carried out in response to information in the request.

3. A method according to claim 1 or claim 2, further comprising predicting a confidence value for the amount of time at least a part of the available radio frequency resource will be available.

4. A method according to any preceding claim, wherein the radio frequency resource is defined as channels of radio frequency spectrum.

5. A method according to any of claims 2 to 4, wherein the predicting step is performed in relation to the current position of a device requesting radio frequency resource.

6. A method according to any of claims 2 to 5, wherein the predicting is performed in relation to movement information received relating to a possible future position of a device requesting radio frequency resource.

7. A method according to any preceding claim wherein the radio frequency resource is TV White Space radio frequency spectrum.

8. Apparatus for managing radio frequency resources comprising:
means for analysing data relating to available radio frequency resource in a geographical area;
means for generating a historic profile of at least one characteristic of said available radio frequency resource relating to the quality thereof; and
means for predicting an amount of time at least a part of the available radio frequency resource will be available for future use based on the historic profile.

9. Apparatus according to claim 8, further comprising means for receiving a request for radio frequency resource and the predicting means is operable in response to information in the request.

10. Apparatus according to claim 8 or claim 9, further comprising confidence predicting means for predicting a confidence value for the amount of time at least a part of the available radio frequency resource will be available.

11. Apparatus according to any of claims 8 to 10, wherein the radio frequency resource is defined as channels of radio frequency spectrum.

12. Apparatus according to any of claims 9 to 11, wherein the predicting means is operable in relation to the current position of a device requesting radio frequency resource.

13. Apparatus according to any of claims 9 to 12, wherein the predicting means is operable in relation to movement information received relating to a possible future position of a device requesting radio frequency resource.

14. Apparatus according to any of claims 8 to 13, wherein the radio frequency resource is TV White Space radio frequency spectrum.
